# FASCICULE DE BREVET EUROPEEN

(11) **EP 0 828 092 B1**
(45) Date de publication et mention de la délivrance du brevet: **15.05.2002**
(21) Numéro de dépôt: 97420160.0
(22) Date de dépôt: 09.09.1997
(51) Int. Cl.: F16H 1/28, F16H 1/36

(54) **Procédé d'assemblage d'un réducteur épicycloidal et réducteur épicycloidal**
Verfahren zum Zusammenbau eines Planetenuntersetzungsgetriebes und Planetenuntersetzungsgetriebe
Method of assembling a planetary reduction gear and planetary reduction gear

(30) Priorité: 10.09.1996 FR 9611234
(43) Date de publication de la demande: 11.03.1998
(73) Titulaire: STAUBLI FAVERGES, 74210 Faverges (FR)
(72) Inventeur: Palau, Joseph, 74000 Annecy (FR); Gerat, Vincent, 74410 Saint-Jorioz (FR)
(74) Mandataire: Myon, Gérard Jean-Pierre

(56) Documents cités:
- EP-A- 0 093 584
- DE-A- 2 648 154
- DE-A- 4 026 886
- FR-A- 2 661 963
- GB-A- 267 733
- GB-A- 1 411 380
- GB-A- 2 195 002

## Description

L'invention a trait à un procédé d'assemblage d'un réducteur épicycloïdal et à un réducteur épicycloïdal.

Un réducteur épicycloidal est connu pour transmettre un mouvement de rotation entre un arbre d'entrée et un arbre de sortie au moyen d'un ou plusieurs satellites. Dans les réducteurs épicycloidaux de l'art antérieur, les dentures de la couronne périphérique et du ou des satellites doivent être réalisées avec une grande précision pour permettre le bon fonctionnement du dispositif et éviter une usure prématurée. De même, le porte-satellites doit être réalisé avec des tolérances de fabrication faibles et le montage des satellites sur ce porte-satellites doit être effectué avec précision. En outre, l'installation des satellites, dans une position permettant l'engrènement de leur denture externe avec la denture interne d'une ou plusieurs couronnes périphériques et/ou d'un arbre central, doit être effectuée avec le plus grand soin.

Il est connu de GB-A-267,733 de procéder à un ajustement circonférentiel de la position des satellites d'un tel réducteur afin qu'il puisse fonctionner dans les deux sens de rotation. Il n'est pas prévu de réglage radial de cette position, ce qui ne permet pas de tenir compte des tolérances de fabrication des éléments constitutifs du réducteur. Par ailleurs, FR-A-2 661 963 divulgue un réducteur dont les satellites sont montés flottants, sans possibilité d'immobilisation.

GB-A-2 195 002 qui constitue l'état de la technique le plus proche, divulgue un réducteur dont les satellites sont pourvus d'axes à excentricité, essentiellement dans le but d'un réglage angulaire de leur position. Le réglage de cette position est effectué grâce à un seul degré de liberté et les axes sont bloqués avec un effort radial.

Compte tenu de ce qui précède, la fabrication d'un réducteur épicycloidal est une opération longue et délicate et le coût de fabrication d'un tel réducteur est relativement élevé, ce qui empêche son utilisation sur des dispositifs dont le coût objectif est faible.

L'invention vise à résoudre ces problèmes et se propose de maîtriser le positionnement d'un satellite par rapport à une ou plusieurs couronnes périphériques et/ou par rapport à un arbre central d'une façon optimale alors que les tolérances de fabrication des dentures et des perçages peuvent être suffisamment grandes pour que le coût d'un réducteur épicycloïdal soit compétitif.

Dans cet esprit, l'invention concerne un procédé d'assemblage d'un réducteur épicycloïdal comprenant une pluralité de satellites munis d'une denture externe mobile en rotation autour d'un arbre, au moins une couronne périphérique munie d'une denture interne et/ou un arbre central muni d'une denture externe. Ce procédé est caractérisé en ce qu'il comprend des étapes consistant à monter l'arbre des satellites sur un porte-satellites de telle sorte qu'il est apte à se déplacer sur ledit porte-satellites indépendamment selon une direction radiale et selon une direction angulaire dans un plan perpendiculaire à l'axe principal du réducteur, à déplacer indépendamment selon les directions radiale et angulaire précitées l'arbre de rotation de chaque satellite jusqu'à une position où sa denture externe engrène avec la denture de la couronne périphérique ou de l'arbre central et à immobiliser dans cette position, par un effort de serrage axial, l'arbre de rotation par rapport au porte-satellites.

Grâce à l'invention, la précision de l'engrènement des dentures est obtenue par le déplacement radial et/ou angulaire des arbres des satellites sur le porte-satellites, la position obtenue au terme du déplacement étant facilement atteinte car elle est définie par la butée de chaque satellite par rapport à la denture d'une couronne périphérique ou d'un arbre central. Comme aucun effort radial n'est exercé sur l'arbre de chaque satellite, on obtient une bonne rotation du satellite par rapport à son arbre.

L'invention concerne aussi un réducteur épicycloïdal permettant de mettre en oeuvre le procédé de l'invention et, plus précisément, un réducteur épicycloïdal comprenant une pluralité de satellites, munis d'une denture externe mobile en rotation chacun autour d'un arbre, au moins une couronne périphérique munie d'une denture interne et/ou un arbre central muni d'une denture externe, l'arbre des satellites étant monté sur un porte-satellites. Ce réducteur est caractérisé en ce que l'arbre des satellites est positionnable indépendamment selon une direction radiale et une direction angulaire dans un plan perpendiculaire à l'axe principal du réducteur, cet arbre étant apte à être immobilisé sur le porte-satellites par un effort de serrage axial.

Dans le réducteur de l'invention l'arbre de chaque satellite peut être déplacé radialement et/ou angulairement pour que le satellite auquel il est associée ait une position optimale par rapport à la denture avec laquelle il doit coopérer.

Selon un premier aspect avantageux de l'invention, le porte-satellites est muni d'une pluralité de lumières aptes à recevoir un élément appartenant à ou solidaire de l'arbre des satellites, chaque lumière ayant des dimensions, dans un plan perpendiculaire audit axe principal, supérieures aux dimensions de cet élément dans le même plan, de sorte qu'un jeu est créé entre ledit élément et ladite lumière. Ces lumières permettent donc le déplacement radial et angulaire des arbres de rotation des satellites.

Selon un autre aspect avantageux de l'invention, chaque satellite comprend une denture externe montée sur son arbre de rotation au moyen d'un roulement à aiguilles. Cette construction permet une rotation de la couronne par rapport à l'arbre du satellite avec un faible coefficient de frottement.

Selon une première variante de l'invention, le réducteur comprend une seconde couronne périphérique munie d'une denture interne apte à engrener avec les satellites. Il est aussi possible de prévoir que les dentures de la première et de la seconde couronnes périphériques ont des nombres de dents différents. Cette répartition du nombre des dents des couronnes périphériques permet un mouvement de rotation relatif d'une des couronnes périphériques par rapport à l'autre, ce mouvement étant généré par la rotation des satellites qui ont des vitesses tangentielles différentes par rapport aux deux couronnes périphériques.

Selon un aspect particulièrement avantageux de l'invention, la différence du nombre des dents des dentures des première et seconde couronnes périphériques est égale au nombre de satellites du réducteur ou à un multiple entier du nombre de satellites de sorte que, lorsque les deux couronnes sont centrées sur un même axe, leurs dentures présentent deux profils qui se superposent exactement en un nombre de points égal au nombre de satellites du réducteur ou à un multiple entier de ce nombre de sattellites.

Il est aussi possible de prévoir que le réducteur comprend deux arbres centraux munis de dentures externes dont les nombres de dents ont une répartition du même type.

L'invention sera mieux comprise et d'autres avantages de celle-ci apparaîtront plus clairement à la lumière de la description qui va suivre de deux modes de réalisation d'un réducteur épicycloïdal conforme à son principe, donnée uniquement à titre d'exemple et faite en référence aux dessins annexés dans lesquels :
- la figure 1 est une vue en coupe transversale d'un réducteur épicycloïdal conforme à un premier mode de réalisation de l'invention ;
- la figure 2 est une vue en coupe longitudinale selon la ligne II-II à la figure 1, on y a représenté par la ligne I-I le plan de coupe de la figure 1 ;
- la figure 3 est une vue en coupe selon la ligne III-III à la figure 2 ;
- la figure 4 est une vue analogue à la figure 2 pour un second mode de réalisation de l'invention et
- la figure 5 est une vue en coupe selon la ligne V-V à la figure 4.

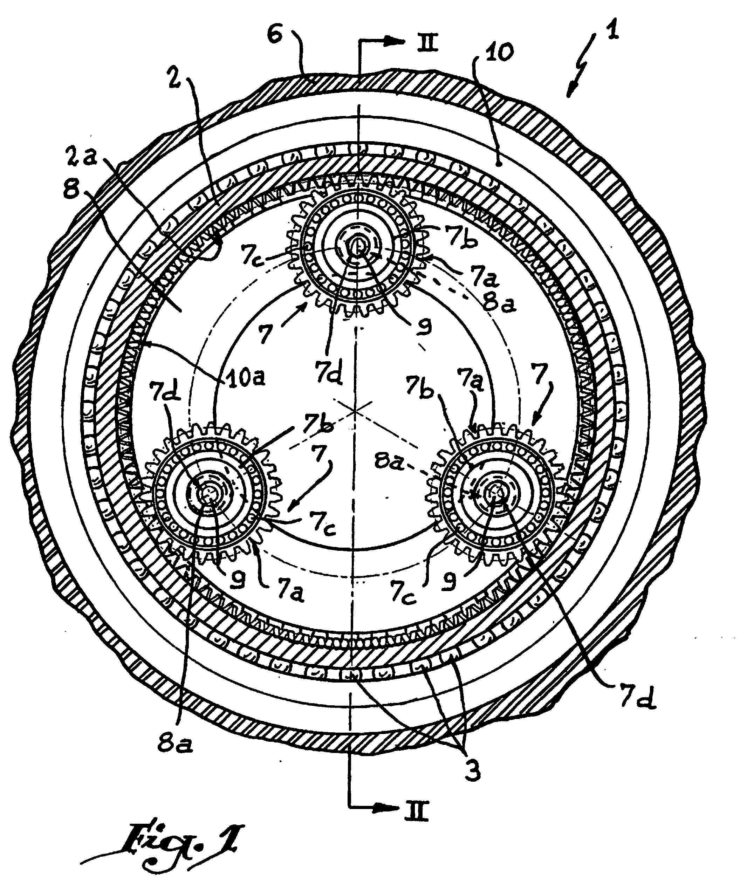

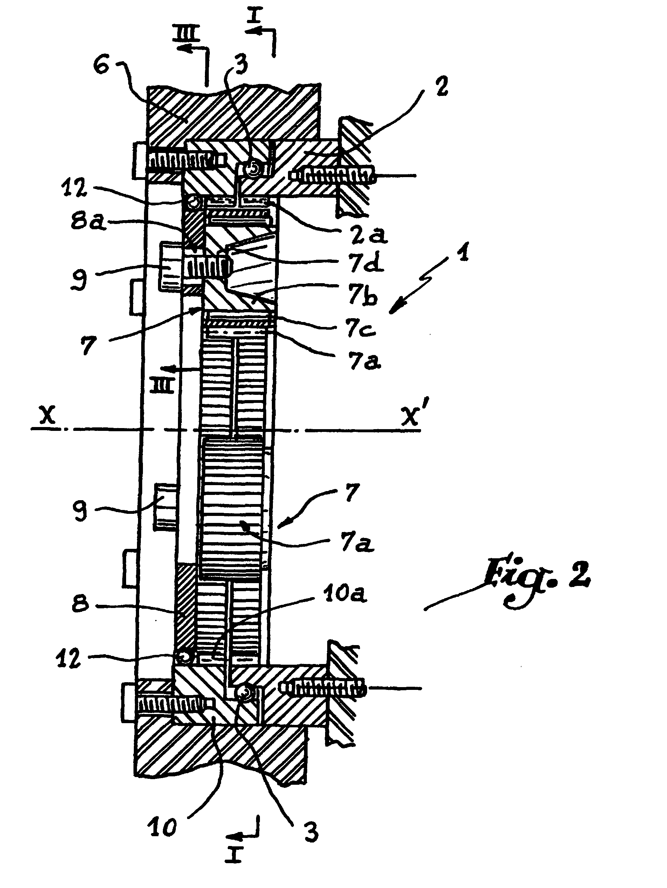

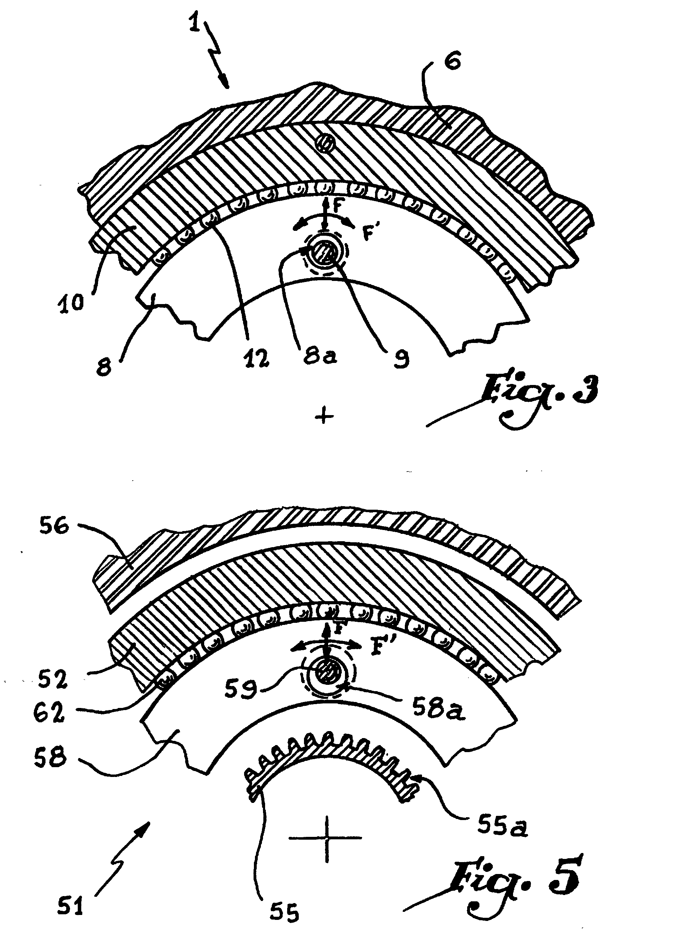

Le réducteur épicycloïdal 1 représenté à la figure 1 comprend une couronne périphérique 2 munie d'une denture interne 2a. Cette couronne périphérique 2 est maintenue, au moyen d'un roulement à billes 3, à l'intérieur d'un bâti 6 fixe. Trois satellites 7 sont régulièrement répartis sur la denture interne 2a et comprennent chacun une denture externe 7a susceptible d'engrener avec la denture 2a. Chaque satellite 7 comprend un arbre de rotation 7b autour duquel est mobile 1a denture 7a au moyen d'un roulement à aiguilles 7c. Le réducteur 1 comprend aussi un porte-satellites 8 sur lequel peuvent être montés les arbres 7b des satellites 7. Pour ce faire, le porte-satellites 8 comprend des lumières 8a en nombre égal au nombre de satellites qu'il doit supporter. Une vis 9, peut être insérée dans chaque lumière 8a et vissée dans un perçage axial taraudé 7d et l'arbre 7b, ce perçage pouvant être ou non débouchant. Chaque lumière 8a a une forme circulaire qui apparaît plus clairement aux figures 1 et 3.

La lumière 8a a un diamètre sensiblement supérieur à celui de la partie filetée de la vis 9 mais inférieur à celui de la tête de cette vis, afin que celle-ci puisse se déplacer à l'intérieur de la lumière et aussi exercer un effort axial de serrage sur l'arbre 7b.

Ainsi, dans le plan de la figure 1, qui est un plan perpendiculaire à l'axe principal XX' du réducteur, la lumière 8a a des dimensions supérieures à celles de la vis 9 dans ce même plan, de sorte qu'un jeu est créé entre la vis 9 et la lumière 8a et que la vis 9 peut être déplacée radialement et angulairement, dans la direction des flèches F et F' de la figure 3, à l'intérieur de la lumière 8a. L'arbre 7b du satellite 7 est monté sur le porte-satellites 8 en étant mobile radialement et angulairement par rapport à l'axe principal XX' du réducteur 1.

Grâce à cette construction du réducteur 1, son assemblage peut avoir lieu de la façon suivante : on monte tout d'abord l'arbre 7b de chaque satellite 7 sur le porte-satellites en insérant la vis 9 dans la lumière 8a et dans le perçage axial taraudé 7d sans serrer complètement la vis 9, de sorte que les arbres 7b des satellites 7 sont aptes à se déplacer radialement et angulairement sur le porte-satellites, à cause des degrés de liberté dus au jeu entre la lumière 8a de la vis 9. La denture 7a de chaque satellite peut être montée sur l'arbre de rotation 7b avant ou après le montage de celui-ci sur le porte-satellites 7. En tout état de cause, lorsque la denture et l'arbre sont montés sur le porte-satellites 8, on déplace radialement et/ou angulairement l'arbre de rotation de chaque satellite en direction de la denture interne 2a de la couronne 2 jusqu'à une position où la denture externe 7a engrène correctement avec la denture interne 2a. Le satellite est ainsi positionné de façon optimale par rapport à la couronne périphérique 2, ce qui permet de réduire fortement, voire d'annuler, le jeu d'engrènement des dentures en contact sans induire de pré-contrainte sur le satellite ou la couronne périphérique. Ceci simplifie grandement le montage.

Lorsque le satellite est dans sa position optimale d'engrènement obtenue grâce à son déplacement, il peut être immobilisé dans cette position, par un effort axial dû au serrage de la vis 9, pour maintenir un engrènement optimal. Ainsi, grâce à ce procédé d'assemblage d'un réducteur épicycloidal, on obtient une uniformisation des jeux et/ou des précontraintes sur l'ensemble des satellites du réducteurs épicycloïdal d'une façon simple alors que les tolérances de fabrication des éléments constitutifs du réducteur peuvent être augmentées sans que cela n'influe négativement sur la qualité du réducteur une fois monté.

Une seconde couronne périphérique 10 munie d'une denture interne 10a, dont le diamètre est sensiblement égal à celui de la denture interne 2a de la couronne périphérique 2, est montée autour de l'axe XX'. La denture interne 10a peut venir en prise, c'est-à-dire engrener avec la denture externe de chacun des satellites 7. On peut, par exemple, prévoir que la couronne 10 est fixe par rapport au bâti 6. Les billes du roulement 3 sont disposées à l'intérieur d'une cage ménagée par les surfaces extérieures des couronnes périphériques 2 et 10. Ces billes constituent un palier permettant la rotation de la couronne périphérique 2 par rapport à la couronne périphérique 10. Ainsi, la couronne périphérique 2 peut constituer l'élément d'entrée ou de sortie du mouvement du réducteur 1 alors que l'élément de sortie ou d'entrée correspondant est constitué par le porte-satellites 8.

En cas de légère différence de diamètre des dentures internes 2a et 10a, les satellites déplacés vers les couronnes 2 et 10 viennent en butée contre la denture de plus petit diamètre et trouvent ainsi naturellement une position d'engrenement optimale. L'invention permet donc de compenser facilement une légère différence de diamètre des dentures internes 2a et 10a.

Selon un aspect particulièrement avantageux de l'invention, les dentures internes 2a et 10a ont des nombres de dents différents. Plus spécifiquement, la différence du nombre de dents des dentures 2a et 10a est égale au nombre de satellites 7, c'est-à-dire trois dans le cas d'espèce, de sorte que les dentures 2a et 10a présentent des dents alignées en trois points également répartis sur les dentures 2a et 10a, ces trois points correspondent aux logements des trois satellites 7. Cette différence du nombre de dents des deux dentures internes 2a et 10a permet de garantir que les satellites 7 sont en permanence maintenus à un écartement angulaire correspondant à celui des points auxquels les dentures 2a et 10a présentent des dents alignées. En effet, la denture externe 7a de chaque satellite 7 doit pouvoir engrener à la fois avec la denture 2a et 10a.

Il est aussi possible de prévoir que la différence du nombre de dents des couronnes 2 et 10 est égale à un multiple entier du nombre de satellites, ce qui permet aussi de répartir régulièrement les satellites sur le circonférence des dentures 2a et 10a.

Un jeu de billes 12 est inséré entre le porte-satellites 8 et la couronne périphérique 10, de sorte qu'elles constituent un palier permettant le maintien du porte-satellites 8 en position et sa rotation autour de l'axe XX'.

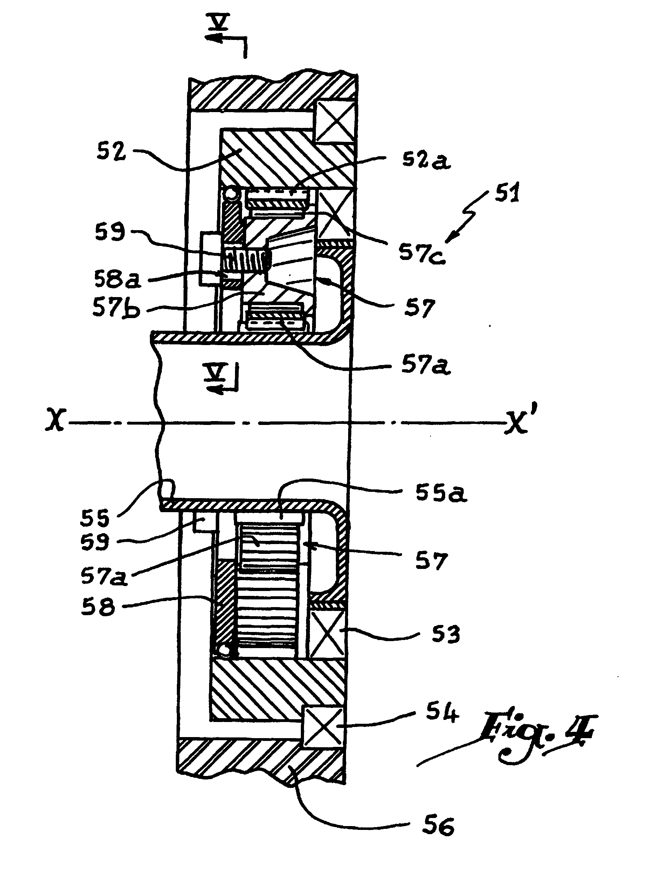

Le réducteur épicycloïdal 51 du second mode de réalisation représenté aux figures 4 et 5 diffère du précédent essentiellement en ce qu'un arbre central 55 est muni d'une denture externe 55a alors qu'une unique couronne 52 est prévue à la périphérie du réducteur, celle-ci étant aussi munie d'une denture 52a. Sur les figures 4 et 5, les éléments analogues à ceux du mode de réalisation des figures 1 et 2 portent des références identiques augmentées de 50.

Les satellites 57 de ce mode de réalisation sont identiques à ceux du mode de réalisation des figures 1 à 3 et comprennent une denture 57a mobile en rotation autour d'un arbre 57b au moyen d'un roulement à aiguilles 57c. Comme dans le mode de réalisation précédent, le procédé d'assemblage consiste essentiellement à monter l'arbre 57b de chaque satellite 57 sur un porte-satellites 58, de telle sorte qu'il est apte à se déplacer radialement et angulairement sur ledit porte-satellites, grâce à une vis 59 solidaire de l'axe 57b et se déplaçant dans une lumière 58a du porte-satellites 58, à déplacer radialement et/ou angulairement la vis 59 dans la lumière 58a jusqu'à une position d'engrènement et à immobiliser chaque satellite en position.

La lumière 58a est formée par un orifice circulaire dont le diamètre est sensiblement supérieur à celui de la partie filetée de la vis 59 mais inférieur à celui de la tête de cette vis. Grâce à la différence des diamètres de la vis 59 et de la lumière 58a, l'arbre 57b est mobile radialement et angulairement sur le porte-satellites 58a comme cela est figuré par les flèche F et F' sur la figure 5.

En cours de montage, on déplace chaque satellite jusqu'à une position où sa denture externe 57a engrène de façon optimale à la fois avec la denture interne 52a de la couronne périphérique 52 et la denture externe 55a de l'arbre central 55.

Selon un mode de réalisation non représenté de l'invention, il est aussi possible de prévoir que le réducteur épicycloïdal comprend deux arbres centraux munis chacun d'une denture externe, dont l'un est fixe, et qui engrènent ensemble avec la denture des satellites, ces arbres centraux ayant des dentures dont les nombres de dents sont différents, d'une différence égale au nombre de satellites ou à un multiple entier de ce nombre. L'arbre central qui n'est pas fixe constitue alors l'élément d'entrée ou de sortie du mouvement du réducteur alors que le porte-satellites en constitue l'élément de sortie ou d'entrée.

La manière dont est fixé l'arbre de rotation de chaque satellite sur le porte-satellites peut aussi varier. L'arbre de rotation de chaque satellite peut comporter un ergot traversant une lumière dans le porte-satellites, cet ergot portant un moyen d'immobilisation, tel que, par exemple, un filet permettant le montage d'un écrou ou un orifice permettant le passage d'une goupille, d'un coin ou de tout autre moyen équivalent. Ces modifications sont à la portée de l'homme du métier.

## Revendications

1. Procédé d'assemblage d'un réducteur épicycloïdal (1, 51) comprenant une pluralité de satellites (7, 57) munis d'une denture externe (7a, 57a) mobile en rotation autour d'un arbre (7b, 57b), au moins une couronne périphérique (2, 10, 52) munie d'une denture interne (2a, 10a, 52a) et/ou un arbre central (55) muni d'une denture externe (55a), **caractérisé en ce qu'**il comprend des étapes consistant à :
- monter ledit arbre desdits satellites sur un porte-satellites (8, 58) de telle sorte qu'il est apte à se déplacer sur ledit porte-satellites indépendamment selon une direction radiale (F) et selon une direction angulaire (F') dans un plan perpendiculaire à l'axe principal (XX') dudit réducteur
- déplacer indépendamment selon lesdites directions radiale (F) et angulaire (F') l'arbre de rotation de chaque satellite jusqu'à une position où sa denture externe (7a, 57a) engrène avec ladite denture (2a, 10a, 52a, 55a) de ladite couronne périphérique (2, 10, 52) ou dudit arbre central (55) et
- immobiliser dans cette position, par un effort de serrage axial, ledit arbre de rotation par rapport audit porte-satellites.

2. Réducteur épicycloïdal (1, 51) comprenant une pluralité de satellites (7, 57), munis d'une denture externe (7a, 57a) mobile en rotation autour d'un arbre (7b, 57b), au moins une couronne périphérique (2, 10, 52) munie d'une denture interne (2a, 10a, 52a) et/ou un arbre central (55) muni d'une denture externe (55a), ledit arbre (7b, 57b) desdits satellites (7, 57) étant monté sur un porte-satellites (8, 58), **caractérisé en ce que** ledit arbre (7b, 57b) desdits satellites (7, 57) est positionnable indépendamment selon une direction radiale (F) et selon une direction angulaire (F') dans un plan perpendiculaire à l'axe principal (XX') dudit réducteur, ledit arbre étant apte à être immobilisé sur ledit porte-satellites par un. effort de serrage axial.

3. Réducteur épicycloïdal selon la revendication 2, **caractérisé en ce que** ledit porte-satellites (5, 58) est muni d'une pluralité de lumières (8a, 58a) aptes à recevoir un élément appartenant à ou solidaire (9, 59) dudit arbre (7b, 57b), chaque lumière ayant des dimensions, dans un plan perpendiculaire audit axe (XX'), supérieures à celles dudit élément dans le même plan, de sorte qu'un jeu est créé entre ledit élément et ladite lumière.

4. Réducteur épicycloïdal selon la revendication 3, **caractérisé en ce que** chaque arbre (7b, 57b) est pourvu d'un perçage axial (7d) taraudé apte à recevoir une vis (9) logée dans une desdites lumières (8a).

5. Réducteur épicycloidal selon la revendication 2, **caractérisé en ce que** chaque satellite comprend une denture externe (7a) montée sur ledit arbre (7b) au moyen d'un roulement à aiguilles (7c).

6. Réducteur épicycloïdal selon l'une des revendications 2 à 5, **caractérisé en ce qu'**il comprend une seconde couronne périphérique (10) munie d'une denture interne (10a) ou un second arbre central muni d'une denture externe apte à engrener avec ledit satellite (7).

7. Réducteur épicycloïdal selon la revendication 6, **caractérisé en ce que** les dentures (2a, 10a) desdites première et seconde couronnes périphériques (2, 10) ou desdits premier et second arbres centraux ont des nombres de dents différents.

8. Réducteur épicycloïdal selon la revendication 7, **caractérisé en ce que** la différence du nombre de dents desdites dentures (2a, 10a) desdites première et seconde couronnes périphériques (2, 10) ou desdits premier et second arbres centraux est égale au nombre de satellites (7) dudit réducteur ou à un multiple entier du nombre de satellites dudit réducteur.

9. Réducteur épicycloïdal selon la revendication 8, **caractérisé en ce que** l'une (10) desdites couronnes périphériques ou l'un desdits arbres centraux est fixe alors que l'autre couronne périphérique (2) constitue 12'élément d'entrée ou de sortie du mouvement dudit réducteur (1).

## Patentansprüche

1. Verfahren zum Zusammenbau eines Planetenuntersetzungsgetriebes (1,51) mit einer Mehrzahl von Planetenrädern (7,57) die mit einer Außenverzahnung (7a,57a) versehen sind, die um eine Achse (7b,57b) drehbar ist, mindestens einen mit einer Innenverzahnung (2a,10a,52a) ausgerüsteten Hohlrad (2,10,52) und/oder einer mit einer Außenverzahnung (55a) ausgerüsteten Mittelachse,
**dadurch gekennzeichnet,**
**daß** es Schritte umfaßt, die bestehen aus:
- Montieren der Achse der Planetenräder auf einen Planetenradträger (8,58) derart, daß sie in der Lage ist, sich auf dem Planetenradträger unabhängig entsprechend einer radialen Richtung (F) und entsprechend einer Winkelrichtung (F') in einer Ebene senkrecht zur Hauptachse (XX') des Untersetzungsgetriebes zu bewegen,
- Verschieben der Drehachse jedes der Planetenräder entsprechend der radialen Richtung (F) und der Winkelrichtung (F') in unabhängiger Weise bis zu einer Position, in der seine Außenverzahnung (7a,57a) mit der Verzahnung (2a,10a,52a,55a) des Hohlrades (2,10,52) oder der Mittelachse (55) in Eingriff tritt und
- Festlegen der Drehachse in dieser Position in Bezug auf den Planetenradträger durch eine axiale Klemmkraft.

2. Planetenuntersetzungsgetriebe (1,51) mit einer Mehrzahl von Planetenrädern (7,57) mit einer Außenverzahnung (7a,57a), die um eine Achse (7b,57b) drehbar ist, mindestens einem Hohlrad (2,10,52), das mit einer Innenverzahnung (2a,10a,52a) ausgerüstet ist, und/oder einer mit einer Außenverzahnung (55a) versehenen Mittelachse (55), wobei die Achse (7b,57b) der Planetenräder (7,57) auf einem Planetenradträger (8,58) befestigt ist, **dadurch gekennzeichnet, daß** die Achse (7b,57b) der Planetenräder (7,57) unabhängig entsprechend einer radialen Richtung (F) und entsprechend einer Winkelrichtung (F') in einer Ebene senkrecht zur Hauptachse (XX') des Untersetzungsgetriebes positionierbar ist, wobei die Achse an dem Planetenradträger durch eine axiale Klemmkraft festgelegt werden kann.

3. Planetenuntersetzungsgetriebe nach Anspruch 2, **dadurch gekennzeichnet, daß** der Planetenradträger (5,58) mit einer Mehrzahl von Löchern (8a,58a) versehen ist, die geeignet sind, ein zu der Achse (7b,57b) gehörendes oder mit ihr fest verbundenes Element (9,59) aufzunehmen, wobei jedes Loch in einer Ebene senkrecht zur Achse (XX') Abmessungen aufweist, die größer als die des Elementes in derselben Ebene sind, derart, daß ein Spiel zwischen dem Element und dem Loch entsteht.

4. Planetenuntersetzungsgetriebe nach Anspruch 3, **dadurch gekennzeichnet, daß** jede Achse (7b,57b) mit einer axialen Gewindebohrung (7d) zur Aufnahme einer in einem der Löcher (8a) aufgenommenen Schraube versehen ist.

5. Planetenuntersetzungsgetriebe nach Anspruch 2, **dadurch gekennzeichnet, daß** jedes Planetenrad eine Außenverzahnung (7a) umfaßt, die über ein Nadellager (7c) auf der Achse (7b) montiert ist.

6. Planetenuntersetzungsgetriebe nach einem der Ansprüche 2 bis 5, **dadurch gekennzeichnet, daß** es ein zweites Hohlrad (10) mit einer Innenverzahnung (10a) oder eine zweite Mittelachse mit einer Außenverzahnung umfaßt, die mit dem Planetenrad in Eingriff (7) treten kann.

7. Planetenuntersetzungsgetriebe nach Anspruch 6, **dadurch gekennzeichnet, daß** die Verzahnungen (2a,10a) des ersten und zweiten Hohlrades (2,10) oder der ersten und zweiten Mittelachse eine unterschiedliche Zähnezahl aufweisen.

8. Planetenuntersetzungsgetriebe nach Anspruch 7, **dadurch gekennzeichnet, daß** die Differenz der Zähnezahl der Verzahnungen (2a,10a) des ersten und zweiten Hohlrades (2,10) oder der ersten und zweiten Mittelachse gleich der Zahl der Planetenräder (7) des Untersetzungsgetriebes oder eines ganzen Vielfachen ist.

9. Planetenuntersetzungsgetriebe nach Anspruch 8, **dadurch gekennzeichnet, daß** eines (10) der Hohlräder oder eine der Mittelachsen feststehend ist, während das andere Hohlrad (2) das Eingangs- oder Ausgangselement der Bewegung des Untersetzungsgetriebes (1) ist.

## Claims

1. A process for assembling an epicyclic gear (1, 51) comprising a plurality of planets (7, 57) which are provided with external teeth (7a, 57a) mobile in rotation about a shaft (7b, 57b), at least one peripheral ring (2, 10, 52) provided with internal teeth (2a, 10a, 52a) and/or a central shaft (55) provided with external teeth (55a), **characterised in that** it comprises steps consisting of:
- mounting said shaft of said planets on a planet carrier (8, 58) such that it is able to move on said planet carrier independently in a radial direction (F) and in an angular direction (F') in a plane perpendicular to the main axis (XX') of said gear,
- displacing independently in said radial (F) and angular (F') directions the spindle of each planet until a position in which its external teeth (7a, 57a) mesh with said teeth (2a, 10a, 52a, 55a) of said peripheral ring (2, 10, 52) or of said central shaft (55), and
- immobilising said spindle in this position relative to said planet carrier by an axial clamping force.

2. An epicyclic gear (1, 51) comprising a plurality of planets (7, 57) which are provided with external teeth (7a, 57a) mobile in rotation about a shaft (7b, 57b), at least one peripheral ring (2, 10, 52) provided with internal teeth (2a, 10a, 52a) and/or a central shaft (55) provided with external teeth (55a), said shaft (7b, 57b) of said planets (7, 57) being mounted on a planet carrier (8, 58), **characterised in that** said shaft (7b, 57b) of said planets (7, 57) can be positioned independently in a radial direction (F) and in an angular direction (F') in a plane perpendicular to the main axis (XX') of said gear, said shaft being capable of being immobilised on said planet carrier by an axial clamping force.

3. An epicyclic gear according to Claim 2, **characterised in that** said planet carrier (5, 58) is provided with a plurality of ports (8a, 58a) suitable for receiving an element belonging to or integral (9, 59) with said shaft (7b, 57b), each port having dimensions, in a plane perpendicular to said axis (XX'), which are greater than those of said element in the same plane, such that a play is created between said element and said port.

4. An epicyclic gear according to Claim 3, **characterised in that** each shaft (7b, 57b) is provided with a threaded axial bore (7d) able to receive a screw (9) housed in one of said ports (8a).

5. An epicyclic gear according to Claim 2, **characterised in that** each planet comprises external teeth (7a) mounted on said shaft (7b) by means of a needle bearing (7c).

6. An epicyclic gear according to one of Claims 2 to 5, **characterised in that** it comprises a second peripheral ring (10) provided with internal teeth (10a) or a second central shaft provided with external teeth able to mesh with said planet (7).

7. An epicyclic gear according to Claim 6, **characterised in that** the sets of teeth (2a, 10a) of said first and second peripheral rings (2, 10) or of said first and second central shafts have different numbers of teeth.

8. An epicyclic gear according to Claim 7, **characterised in that** the difference in the number of teeth of said sets of teeth (2a, 10a) of said first and second peripheral rings (2,10) or of said first and second central shafts is equal to the number of planets (7) of said gear or to a whole multiple of the number of planets of said gear.

9. An epicyclic gear according to Claim 8, **characterised in that** one (10) of said peripheral rings or one of said central shafts is fixed, while the other peripheral ring (2) constitutes the entry or exit element of the movement of said gear (1).
